Europäisches Patentamt

European Patent Office

Office européen des brevets

(11) Veröffentlichungsnummer: **0 076 449**
**A1**

## (12) EUROPÄISCHE PATENTANMELDUNG

(21) Anmeldenummer: **82108914.1**

(22) Anmeldetag: **27.09.82**

(51) Int. Cl.$^3$: **B 27 K 3/50**
**//A01N55/04**

(30) Priorität: **02.10.81 DE 3139252**

(43) Veröffentlichungstag der Anmeldung:
**13.04.83 Patentblatt 83/15**

(84) Benannte Vertragsstaaten:
**AT BE CH DE FR GB IT LI NL SE**

(71) Anmelder: **BASF Aktiengesellschaft**
**Carl-Bosch-Strasse 38**
**D-6700 Ludwigshafen(DE)**

(72) Erfinder: **Reuther, Wolfgang, Dr.**
**Am Pferchelhang 16**
**D-6900 Heidelberg(DE)**

(72) Erfinder: **Borck, Hans-Volker, Dipl.-Holzwirt**
**Im Kastanienwald 8**
**D-7570 Baden-Baden(DE)**

(54) **Holzschutzmittel.**

(57) Holzschutzmittel, enthaltend eine Mischung aus
A) N-Cyclohexyl-N-methoxy-2,5-dimethyl-furan-3-carbon-
säureamid und
B) Tributylzinnoxid und Verfahren zum Behandeln von Holz
mit dieser Mischung.

EP 0 076 449 A1

BASF Aktiengesellschaft

## Holzschutzmittel

Die vorliegende Erfindung betrifft ein Holzschutzmittel, das eine Mischung von Wirkstoffen enthält, und Verfahren zum Behandeln von Holz mit dieser Mischung.

Es ist bekannt, zum Schutz von Holz gegen den Angriff holzzerstörender Pilze, wie Coniophora cerebella, Poria monticola, Coriolus versicolor, Lenzites trabea u.a., N-Cyclohexyl-N-methoxy-2,5-dimethyl-furan-3-carbonsäureamid zu verwenden (US-PS 3 993 772). Davon sind jedoch für einen wirksamen Holzschutz verhältnismäßig hohe Anwendungskonzentrationen erforderlich. Hinzu kommt, daß diese Verbindung gegen holzverfärbende Pilze, wie Pullularia pullulans, Sclerophoma pityophila u.a., nicht ausreichend wirksam ist.

Es ist ferner bekannt, daß sich mit Bis-(tri-n-butylzinn)-oxid (Tributylzinnoxid, TBTO) eine Vielzahl von Mikroorganismen, wie Pilze, Algen und Bakterien, bekämpfen läßt (Pesticide Index, 1976, S. 26). Die Wirksamkeit bei Pilzen erstreckt sich dabei sowohl auf holzzerstörende als auch holzverfärbende Pilze. Nachteilig ist bei dieser Substanz, daß gegenüber wichtigen holzzerstörenden Pilzen, wie Coniophora cerebella und Polystictus versicolor, eine ausgesprochene Wirkungsschwäche vorliegt, wodurch für sachgemäßen Holzschutz höhere Aufwandmengen nötig sind. Im Falle von TBTO ist dies besonders unerwünscht und problematisch, da aufgrund seines Zinngehalts das Arbeiten mit diesem Wirkstoff, insbesondere bei hoher Wirkstoffkonzentration, nicht ohne Gefahr ist.

Sws/P

Es wurde nun gefunden, daß eine Mischung aus

A)  N-Cyclohexyl-N-methoxy-2,5-dimethyl-furan-3-carbonsäureamid und

B)  Bis-(tri-n-butylzinn)-oxid (Tributylzinnoxyd)

eine über die Wirksamkeit der Einzelwirkstoffe hinausgehende
fungizide Wirksamkeit aufweist, d.h. es liegt ein Synergismus vor. Das Mischungsverhältnis der Wirkstoffe kann in
einem weiten Bereich schwanken. Beispielsweise wurde bei
einem Gewichtsverhältnis A : B wie 1 : 9 bis 9 : 1, vorzugsweise 1 : 3 bis 3 : 1, insbesondere 1 : 1, eine hervorragende Wirkung gegen Holzschädlinge aller Art erzielt.

Die neuen Wirkstoffmischungen können in Zubereitungen,
wie Lösungen, Emulsionen, Pasten und Öldispersionen, angewendet werden. Die Zubereitungen enthalten im allgemeinen
zwischen 0,1 und 90 % Wirkstoffgemisch, vorzugsweise 0,25
bis 50 % (Gewichtsprozente).

Von dem Wirkstoffgemisch werden je nach Holzart und Verwendungszweck des geschützten Holzes 0,05 bis 5, vorzugsweise 0,1 bis 2 kg Wirkstoffgemisch je $m^3$ Holz in das
Holz eingebracht. Die obere Grenze ergibt sich im allgemeinen aus wirtschaftlichen Gegebenheiten und kann im Einzelfall auch höher sein.

Die Anwendung des Wirkstoffgemisches erfolgt z.B. in öliger
oder wäßriger Form durch Streichen, Spritzen, Sprühen und
Tauchen. Die Anwendungsmengen, bezogen auf die Holzoberfläche, betragen bei diesen Verfahren je nach Anwendungszweck und Wirkstoffkonzentration im allgemeinen 75 bis
350, vorzugsweise 100 bis 200 g Wirkstoffmischung je $m^2$
Holzoberfläche. Grundier- und Anstrichmittel für Holz enthalten beispielsweise 0,5 bis 3,5 Gew.% der Wirkstoffmischung.

Ein besonders effektiver Holzschutz wird erzielt, wenn das Wirkstoffgemisch in Autoklaven, Kesseln, Kammern in speziellen technischen Verfahren, z.B. unter Anwendung des Vakuumverfahrens, Vakuumdruckverfahrens oder Doppelvakuumverfahrens in das Holz eingebracht wird. Zum Schutz von Holzwerkstoffen kann das Wirkstoffgemisch bei der Herstellung der Holzwerkstoffe z.B. als Emulsion oder als solches dem Bindemittel oder Klebstoff, z.B. in Mengen von 2 bis 6 Gew.%, bezogen auf den Klebstoff, zugesetzt werden.

Zur Vergrößerung des Wirkungsspektrums oder zur Erzielung besonderer Effekte können der Wirkstoffmischung auch Insektizide und andere Wirkstoffe zugesetzt werden. Besonders günstige Mischungspartner sind folgende Verbindungen:

Trialkylzinnverbindungen
Methylenbisthiocyanat
2-Halogen-benzoesäureanilid
N,N-Dimethyl-N'-phenyl-(N-fluormethylthio)-sulfamid
N-Phenyl-N,N'-dimethyl-N'-fluordichlormethyl-thio-sulfonyl-diamid
Benzimidazol-2-carbaminsäure-methylester
2-Thiocyanomethyl-thiobenzothiazol
Kupfernaphthenat
8-Hydroxychinolin bzw. dessen Kupfersalz
N-Trichlormethylthio-tetrahydrophthalimid
N-Trichlormethylthio-phthalimid
N-(1,1,2,2-Tetrachlorethylthio)-tetrahydrophthalimid
N,N-Dimethyl-N'-p-tolyl-N'-dichlorfluormethylthiosulfamid

**Beispiel 1**
Grenzwertbestimmung der Wirkung gegen holzzerstörende
Pilze

Das Verfahren dient zur Bestimmung der vorbeugenden Wirkung von Holzschutzmitteln gegen holzzerstörende Pilze aus der Klasse der Basidiomyceten.

Gleichartige, bei 103°C bis zur Gewichtskonstanz getrocknete Holzklötzchen (5 x 2,5 x 1,5 cm) werden mit abgestuften Mengen des zu prüfenden Holzschutzmittels vollgetränkt, getrocknet, mit Wasser ausgewaschen (Auswaschung der Wirkstoffmischung aus dem Holz) und in Glasschalen dem Angriff von Kulturen holzzerstörender Basidiomyceten ausgesetzt. Als Nährboden für die Pilze dient Malzagar (enthaltend 4 % Malzextrakt). Die Wirkstoffe werden in Isopropanol gelöst. Die durch den Pilzbefall bewirkte Zerstörung des Holzes wird durch den Gewichtsverlust der Probehölzer erfaßt; ein Gewichtsverlust von 2 % und mehr wird als Holzzerstörung gewertet.

Angegeben wird eine untere Wirkstoffkonzentration, bei der das Holz gerade noch zerstört wird und eine obere Wirkstoffkonzentration, bei der keine Holzzerstörung mehr zu erkennen ist, somit ein vollständiger Holzschutz erreicht ist. Für die Bewertung eines Holzschutzmittels in der Praxis ist immer von der oberen Wirkstoffkonzentration nach Auswaschung auszugehen.

Grenzwertbestimmung der Wirkung gegen holzzerstörende Pilze nach Auswaschung (in kg Wirkstoff je $m^3$ Holz).
Wirkstoff A = N-Cyclohexyl-N-methoxy-2,5-dimethyl-furan-3-carbonsäureamid
Wirkstoff B = Tributylzinnoxid

| Wirkstoff | Coniophora puteana | Poria monticola | Coriolus versicolor |
|---|---|---|---|
| A | 0,1-0,3 | 0,3-0,8 | 0,05-0,12 |
| B | 1,0-1,5 | 0,1-0,2 | 1,2 -2,3 |
| Wirkstoff-Mischung | | | |
| A:B = 1:1 | 0,02-0,05 | 0,05-0,1 | 0,02-0,05 |

Das Ergebnis des Versuches zeigt, daß eine 1 : 1 (Gewichtsverhältnis) Mischung der Wirkstoffe A und B gegenüber den Einzelwirkstoffen eine deutlich bessere Wirksamkeit besitzt.

Beispiel 2

Die Wirkstoffmischungen werden, in Aceton gelöst, in Mengen von 0,5, 1 und 5 ppm einem warmen Malzagar zugesetzt. Der Agar wird in Petrischalen gegossen, und nach dem Erstarren werden die wirkstoffhaltigen Agarplatten mit dem Myzel der in der Tabelle angegebenen Pilzarten beimpft und bei Normalklima (20°C, 90 % Luftfeuchtigkeit) aufbewahrt.

Die Auswertung erfolgt je nach der Wachstumsgeschwindigkeit der einzelnen Pilze nach 9 bis 14 Tagen. Bei der Auswertung wird die Entwicklung der Pilzkolonie auf dem Nährboden nach dem folgenden Schema beurteilt.

0 = kein Pilzwachstum

1 = geringes Pilzwachstum (bis 1/3 der Agaroberfläche bewachsen)

3 = mittleres Pilzwachstum (bis 2/3 der Agaroberfläche bewachsen)

5 = ungehemmtes Pilzwachstum (gesamte Agaroberfläche bewachsen)

Wirkstoffkonzentrationen und Pilzwachstum gehen aus der folgenden Tabelle hervor.

| Wirkstoffmischung A:B (Gewichtsverhältnis) | Coniophora puteana 0,5 | 1 | 5 ppm | Poria monticola 0,5 | 1 | 5 ppm |
|---|---|---|---|---|---|---|
| 9 : 1 | 3 | 1 | 0 | 3 | 1 | 0 |
| 3 : 1 | 3 | 1 | 0 | 3 | 1 | 0 |
| 1 : 1 | 1 | 0 | 0 | 1 | 0 | 0 |
| 1 : 3 | 3 | 3 | 0 | 3 | 1 | 0 |
| 1 : 9 | 3 | 3 | 0 | 2 | 1 | 0 |

Das Ergebnis des Versuches zeigt, daß die verschiedenen Wirkstoffmischungen eine gute fungizide Wirkung haben.

Beispiel 3

Rezepturbeispiel

| | |
|---|---|
| N-Cyclohexyl-N-methoxy-2,5-dimethyl--furan-3-carbonsäureamid | 1,0 Gew.% |
| Tributylzinnoxid | 1,0 Gew.% |
| $\gamma$-Hexachlorcyclohexan | 0,5 Gew.% |
| Sikkativ (Metallsalze von Fettsäuren) | 0,25 Gew.% |
| Alkydharz (100%, d.h. berechnet ohne Lösungsmittel) | 12,0 Gew.% |
| aromatische und aliphatische Kohlenwasserstoffe (Siedebereich 180-220°C) | 85,25 Gew.% |
| | 100,00 Gew.% |

In entsprechender Weise werden ölige Holzschutzmittel mit 0,25 bis 5 Gew.% der Wirkstoffmischung A+B hergestellt, wobei das Gewichtsverhältnis A : B variieren kann.

Dem Holzschutzmittel können auch Korrosionsinhibitoren zugesetzt werden.

Zur Erzielung von Farbeffekten können feinteilige anorganische oder organische Pigmente oder öllösliche Farbstoffe in die Holzschutzmittel eingearbeitet werden. Zur Herstellung wasserabweisender Imprägnieranstriche können den Holzschutzmitteln sogenannte "water repellents", wie Metallstearate oder Wachse, zugesetzt werden.

Patentansprüche

1.  Holzschutzmittel, enthaltend eine Mischung aus

    A)  N-Cyclohexyl-N-methoxy-2,5-dimethyl-furan-3-carbonsäureamid und

    B)  Bis-(tri-n-butylzinn)oxid.

2.  Verfahren zum Schutz von Holz, dadurch gekennzeichnet,
    daß man das Holz mit einer Mischung aus

    A)  N-Cyclohexyl-N-methoxy-2,5-dimethyl-furan-3-carbonsäureamid und

    B)  Bis-(tri-n-butylzinn)oxid

    behandelt.

# EUROPÄISCHER RECHERCHENBERICHT

**Europäisches Patentamt**

**0076449**
Nummer der Anmeldung

EP 82 10 8914

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| E | EP-A-0 066 764 (SCHERING) * Beispiele 2,3; Seite 6, Zeilen 7-12; Seite 7, Zeilen 26-31; Seite 9, Zeilen 22-27; Ansprüche * | 1,2 | B 27 K 3/50 // A 01 N 55/04 |
| X | EP-A-0 035 096 (DESOWAG-BAYER HOLZSCHUTZ) * Seite 13, Zeilen 13-16; Anspruch 11 * | 1,2 | |
| Y | EP-A-0 022 900 (DEUTSCHE SOLVAY-WERKE) * Seite 9, Zeilen 6-15; Seite 10, Zeilen 11-19; Seite 11, Zeilen 4-9 * | 1,2 | |
| Y | EP-A-0 008 606 (DEUTSCHE SOLVAY-WERKE) * Seite 8, Zeile 15 - Seite 10, Zeile 23 * | 1,2 | RECHERCHIERTE SACHGEBIETE (Int. Cl. 3) B 27 K A 01 N |
| A | DE-A-1 810 466 (BILLITON) * Ansprüche 1,14 * | 1,2 | |
| A | DE-A-2 455 082 (BASF) * Seite 4, Beispiel 2; Ansprüche * | 1,2 | |

Der vorliegende Recherchenbericht wurde für alle Patentansprüche erstellt.

| Recherchenort DEN HAAG | Abschlußdatum der Recherche 03-01-1983 | Prüfer FLETCHER A.S. |
|---|---|---|